## Europäisches Patentamt
## European Patent Office
## Office européen des brevets

(19)

(11) Veröffentlichungsnummer : **0 402 706 B1**

(12) **EUROPÄISCHE PATENTSCHRIFT**

(45) Veröffentlichungstag der Patentschrift :
**03.06.92 Patentblatt 92/23**

(51) Int. Cl.⁵ : **G01C 19/66, H01S 3/083**

(21) Anmeldenummer : **90110317.6**

(22) Anmeldetag : **30.05.90**

(54) **Ringlaserkreisel.**

(30) Priorität : **02.06.89 DE 3918050**

(43) Veröffentlichungstag der Anmeldung :
**19.12.90 Patentblatt 90/51**

(45) Bekanntmachung des Hinweises auf die
Patenterteilung :
**03.06.92 Patentblatt 92/23**

(84) Benannte Vertragsstaaten :
**DE FR GB IT**

(56) Entgegenhaltungen :
**FR-A- 2 030 688**
**US-A- 3 562 664**
**US-A- 4 720 832**

(73) Patentinhaber : **HONEYWELL
REGELSYSTEME GMBH
Kaiserleistrasse 39
W-6050 Offenbach am Main (DE)**

(72) Erfinder : **Esskuchen, Uwe, Dipl.-Phys
Kremelstrasse 2
W-6759 Essweiler (DE)**
Erfinder : **Hansli, Werner, Dipl.-Ing.
Im Kirschensand 6
W-6146 Alsbach 1 (DE)**

(74) Vertreter : **Herzbach, Dieter et al
Honeywell Europe S.A. Holding KG Patent-
und Lizenzabteilung Kaiserleistrasse 39
Postfach 10 08 65
W-6050 Offenbach am Main (DE)**

EP 0 402 706 B1

**Beschreibung**

Die vorliegende Erfindung bezieht sich auf einen Ringlaserkreisel nach dem Gattungsbegriff des Patentanspruches 1.

Aus der DE-OS 28 39 066 ist es beispielsweise bekannt, bei einer dreieckförmigen Laserstruktur symmetrisch zur Mittellinie des Dreiecks an den Schenkeln jeweils eine Anode und an der Basis des Dreiecks eine Kathode anzuordnen. Durch Anlegen einer Zündspannung zwischen den Anoden und der Kathode kommt es zur Ionisation des Gases und zur Zündung der Gasentladung, wodurch sich zwei entgegengesetzt umlaufende Laserstrahlen in der dreieckförmigen Resonatorstrecke ergeben. Die Zündspannung der Gasentladung hängt von der Form und der Länge der Entladungsstrecke und vom Gasdruck und der Gaszusammensetzung ab. Wenn die Gasentladung in Gang gekommen ist, so sinkt der innere Widerstand der Entladungsstrecke ab und die Spannung zwischen der Anode und der Kathode geht auf die Brennspannung zurück. Bei Gasentladungen mit zwei Teilentladungsstrecken, wie im Ringlaserkreisel, zünden die beiden Strecken nicht gleichzeitig. Dadurch entsteht eine Situation, bei der sich eine Elektrode noch auf dem Zündspannungspotential befindet, während zwischen den beiden anderen Elektroden nur noch eine Potentialdifferenz in Höhe der Brennspannung besteht. Da die Zündspannung wesentlich höher als die Brennspannung ist, besteht nun die Möglichkeit, daß die Entladung in der Resonatorbohrung zündet, die nicht als Verstärkungsbohrung gedacht ist. Dies muß verhindert werden, und es wurden daher bereits Maßnahmen in der Zündelektronik vorgesehen, die die Entladung wieder ausschalten, falls die Spannungswerte an den Elektroden nach dem Zünden nicht symmetrisch sind, um einen erneuten Zündvorgang danach einzuleiten. Diese Maßnahme löst das Problem im Prinzip nicht, da die Entladung in beiden Strecken grundsätzlich nicht gleichzeitig in Gang gesetzt wird.

Es ist daher die Aufgabe der vorliegenden Erfindung, Maßnahmen vorzusehen, die auch bei einer nicht gleichzeitigen Zündung der Teilentladungsstrecken gewährleisten, daß die Gasentladung auf die eigentliche Verstärkungsbohrung beschränkt bleibt.

Die Lösung dieser Aufgabe gelingt gemäß den abhängigen Merkmalen des Patentanspruches 1. Weitere vorteilhafte Ausgestaltungen der Erfindung sind den Ansprüchen entnehmbar.

Gemäß der vorliegenden Erfindung wird eine Ionenfalle unmittelbar hinter den an Zündspannung liegenden Elektroden in der Nähe der Resonatorbohrung angebracht, in der keine Entladung brennen darf. Diese Ionenfalle kann aus einem angelegten elektrischen oder magnetischen Feld bestehen.

Anhand der Figuren der beiliegenden Zeichnung sei im folgenden die Erfindung näher beschrieben. Es zeigen:

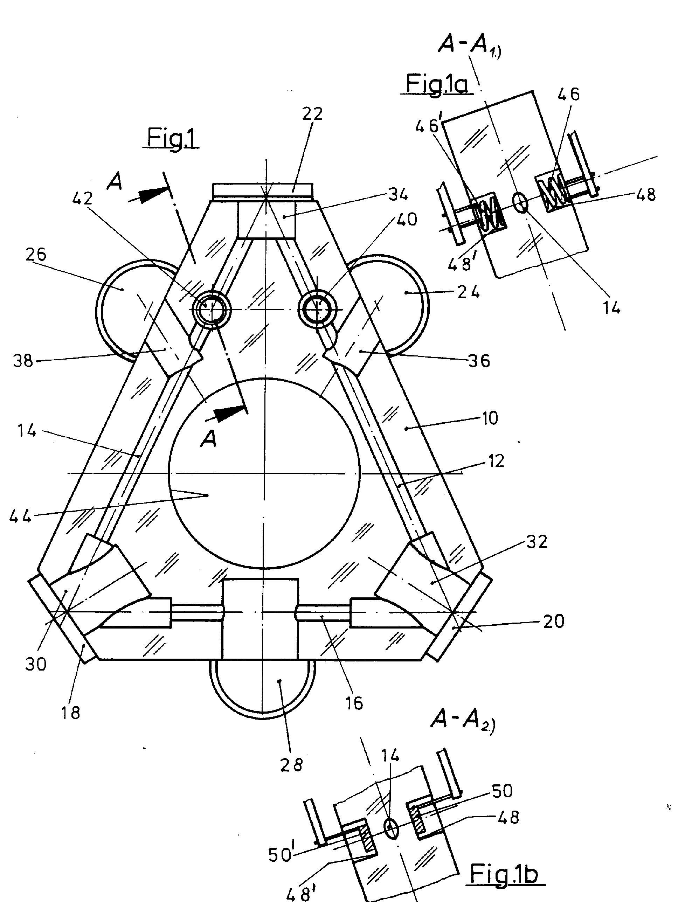

Figur 1 eine aufgeschnittene Draufsicht auf einen Ringlaserkreisel;

Figur 1a eine Schnittansicht gemäß Linie A-A in Figur 1 für ein erstes Ausführungsbeispiel der Erfindung; und

Figur 1b eine Schnittansicht gemäß Linie A-A in Figur 1 für ein zweites Ausführungsbeispiel der Erfindung.

Gemäß Figur 1 weist ein gleichschenkliger Laserblock 10 parallel zu seinen Seitenwänden Bohrungen 12, 14 und 16 auf, die in den Eckpunkten durch Spiegel 18, 20 und 22 abgeschlossen sind und somit einen Hohlraumresonator bilden. Um eine Gasentladung in Gang zu bringen und zwei gegenläufige Laserstrahlen zu erzeugen, sind symmetrisch zur Mittellinie des gleichschenkligen Dreiecks auf den beiden Schenkeln des Blockes 10 zwei Kathoden 24 und 26 und auf der Grundlinie des Blockes 10 eine Anode 28 angeordnet.

In den Eckpunkten des Laserblockes 10 münden die Bohrungen 12, 14 und 16 jeweils in Freibohrungen 30, 32 und 34, durch die das enthaltene Gasvolumen vergrößert wird.

Die eigentliche Verstärkungsbohrung wird durch die Bohrungen 12 und 14 in dem Bereich zwischen den Kathoden 24 und 26 und den Eckspiegeln 18 und 20 gebildet. Um das Zünden der Teilentladungsstrecken auf diesen Bereich der Bohrungen zu beschränken, sind schräg angesetzte Bohrungen 36 und 38 vorgesehen, die die Kathoden 24 und 26 mit den Verstärkungsbohrungen 12 und 14 verbinden, wobei die Schräge so getroffen ist, daß die Bohrungen 36 und 38 eine Komponente in Richtung auf die Verstärkungsbohrungen 12 und 14 aufweisen. Durch diese Maßnahmen wird bereits ein Zünden in der falschen Richtung erschwert.

Für den Fall, daß diese Geometrievariationen nicht bereits den gewünschten Effekt erbringen, sind Ionenfallen 40 und 42 zwischen den Kathoden 24 und 26 und der Spitze der dreieckförmigen Laserstruktur angeordnet. Diese werden nachfolgend noch näher beschrieben.

Eine kreisförmige zentrale Aussparung 44 ist in dem Laserblock 10 vorgesehen und dient der Aufnahme einer an sich bekannten Vibrationseinrichtung, um den Ringlaserkreisel in eine hin- und hergehende Drehschwingung zu versetzen.

Gemäß Figur 1a umfassen die Ionenfallen 40 und 42 zwei Spulen 46 und 46′, die in Sackbohrungen 48 und 48′ angeordnet sind, wobei die Sackbohrungen 48 und 48′ von der Oberseite und Unterseite des Laserblockes 10 angebracht sind und der Grund dieser Sackbohrungen einen Abstand von den Bohrungen 12 und 14 aufweist. Die Bohrung befindet sich hierbei symmetrisch zwischen der Spulenanordnung, so daß beim Durchschicken eines Stromes durch die Spulen ein magnetisches Feld entsteht, das für den Fall, daß dieser Teil der Bohrung von geladenen Teilchen des Plasmas durchwandert wird, diese Teilchen ablenkt, so daß sie die jeweils andere Kathode nicht erreichen. Zur Erzeugung des Magnetfeldes zur Ionenablenkung werden hohe Ströme benötigt, da die Spulen keine weichmagnetischen Kerne zur Feldbündelung aufweisen dürfen, da im Betrieb des Ringlaserkreisels der verbleibende Restmagnetismus die Qualität des Ringlaserkreisels negativ beeinflussen würde.

Eine diesbezüglich bessere Lösung stellt die Anordnung gemäß Figur 1b dar, bei der auf dem Grund der Sackbohrungen 48 und 48′ zwei Kondensatorplatten 50 und 50′ angeordnet sind, die einen Plattenkondensator bilden, der die Bohrung 14 zwischen sich einschließt und an den während des Zündvorganges eine hohe Spannung angelegt wird. Zur Erzeugung des elektrischen Feldes ist eine hohe Spannung erforderlich, die möglichst von der Zündspannung galvanisch getrennt sein sollte und bereits vor Anlegen der Zündspannung am Kondensatorplattenpaar anliegen sollte. Nach erfolgtem Zünden wird diese Steuerspannung abgeschaltet und das Plattenpaar kurzgeschlossen, um das elektrische Feld mit Sicherheit zu beseitigen. Auf diese Weise erfährt die Qualität des Ringlaserkreisels keinerlei Minderung.

## Patentansprüche

1. Ringlaserkreisel mit einer symmetrischen Elektrodenanordnung zur Erzeugung einer Gasentladung in zwei Teilentladungsstrecken und zur Erzeugung zweier entgegengesetzt umlaufender Laserstrahlen in einem durch Bohrungen in einem Block gebildeten Hohlraumresonator, **gekennzeichnet durch** wenigstens eine Ionenfalle (40, 42), die in der Nähe der Bohrung angeordnet ist, in der keine Entladung brennen soll.

2. Ringlaserkreisel nach Anspruch 1, **gekennzeichnet durch** zwei symmetrisch angeordnete Ionenfallen (40, 42).

3. Ringlaserkreisel nach Anspruch 2, **gekennzeichnet durch** die Anordnung von an einer Spannung liegenden Kondensatorplatten (50, 50′) quer zu der Bohrung (12, 14).

4. Ringlaserkreisel nach Anspruch 2, **gekennzeichnet durch** die Anordnung von stromdurchflossenen Spulen (46, 46′) quer zu der Bohrung (12, 14).

5. Ringlaserkreisel nach Anspruch 3 oder 4, **dadurch gekennzeichnet**, daß die Kondensatorplatten (50, 50′) bzw. Spulen (46, 46′) in Sackbohrungen (48, 48′) in dem Block (10) angeordnet sind, wobei die Sackbohrungen in der Ober- und Unterseite des Blockes (10) angeordnet sind und der Grund der Sackbohrung einen Abstand von der jeweiligen Resonatorbohrung (12, 14) aufweist.

6. Ringlaserkreisel nach Anspruch 1, **dadurch gekennzeichnet**, daß die zwei mit der dritten Elektrode zusammenwirkenden Elektroden (24, 26) über schräg angesetzte Bohrungen (36, 38) mit der jeweiligen Resonatorbohrung (12, 14) verbunden sind.

7. Ringlaserkreisel nach Anspruch 2 mit einem dreieckförmigen Block, in dem die den Resonator bildenden Bohrungen angeordnet sind, wobei zwei an Zündspannung liegende Elektroden an den Schenkeln des dreieckförmigen Blockes angeordnet sind und eine an Bezugspotential liegende Elektrode an der Basis der dreieckförmigen Blocks angeordnet ist, **dadurch gekennzeichnet**, daß die Ionenfallen (40, 42) zwischen den an Zündspannung liegenden Elektroden (24, 26) und der Spitze des dreieckförmigen Blocks (10) angeordnet sind.

8. Ringlaserkreisel nach Anspruch 7, **dadurch gekennzeichnet**, daß die Elektroden an den Schenkeln des dreieckförmigen Blockes durch Kathoden (24, 26) vorgegeben sind und die Elektrode an der Basis des dreieckförmigen Blockes durch eine Anode (28) vorgegeben ist.

## Claims

1. Ring laser gyro comprising a symmetrical electrode arrangement for producing a gas discharge in two partial gas discharge paths so as to produce two counter-propagating laser beams in a cavity resonator formed by bores in a laser block, **characterized by** at least one ion trap (40,42) arranged in proximity of said bore at a location where no discharge shall be present.

2. Ring laser gyro according to claim 1, **characterized by** two symmetrically arranged ion traps (40,42).

3. Ring laser gyro according to claim 2, **characterized by** the arrangement of condenser plates (50,50′) normal to the bore (12,14) and connected to a voltage.

4. Ring laser gyro according to claim 2, **characterized by** the arrangement of current-carrying coils (46,46′) normal to the bore (12,14).

5. Ring laser gyro according to claim 3 or 4, **characterized in that** the condenser plates (50,50′) or coils (46,46′), respectively, are arranged in blind holes (48,48′) within said block (10) whereat the blind holes are provided in the cover and the bottom surface of the block (10) and the bottom of the blind hole comprises a distance from each said resonator bore (12,14).

6. Ring laser gyro according to claim 1, **characterized in that** the two electrodes (24,26) acting together with the third electrode each are connected to the resonator bore (12,14) by means of inclined bores (36,38).

7. Ring laser gyro according to claim 2 comprising a triangular-shaped block into which the bores forming the resonator are machined wherein two electrodes connected to the ignition voltage are arranged on the side legs of the triangular-shaped block and one electrode connected to the reference voltage is arranged on the base leg of the triangular-shaped block, **characterized in that** the ion traps (40,42) are arranged between the triangular point of the triangular-shaped block (10) and the electrodes (24,26) connected to the ignition voltage.

8. Ring laser gyro according to claim 7, **characterized in that** the electrodes at the side legs of the triangular-shaped block are formed by cathodes and the electrode on the base leg of the triangular-shaped block is formed by an anode (28).

## Revendications

1. Gyrolaser en anneau comportant une disposition symétrique d'électrodes pour produire une décharge gazeuse dans deux chemins partiels de décharge et pour produire deux rayons laser se déplaçant en sens inverse dans une cavité résonnante formée par des alésages dans un bloc, caractérisé par au moins un piège à ions (40, 42) gui est disposé à proximité de l'alésage dans lequel ne doit pas se produire de décharge.

2. Gyrolaser en anneau selon la revendication 1, caractérisé par deux pièges à ions (40, 42) disposés symétriquement.

3. Gyrolaser en anneau selon la revendication 2, caractérisé par la disposition, transversalement à l'alésage (12, 14), de plaques de condensateur (50, 50') auxquelles est appliquée une tension.

4. Gyrolaser en anneau selon la revendication 2, caractérisé par la disposition, transversalement à l'alésage (12, 14), de bobines (46, 46') traversées par un courant.

5. Gyrolaser en anneau selon la revendication 3 ou 4, caractérisé en ce que les plaques de condensateur (50, 50') ou les bobines (46, 46') sont disposées dans des alésages borgnes (48, 48') dans le bloc (10), les alésages borgnes étant réalisés dans le côté supérieur et le côté inférieur du bloc (10), et le fond de l'alésage borgne se situant à une certaine distance de l'alésage résonnant correspondant (12, 14).

6. Gyrolaser selon la revendication 1, caractérisé en ce que les deux électrodes (24, 26) coopérant avec la troisième, sont reliées à l'alésage résonnant correspondant (12, 14), par l'intermédiaire d'alésages (36, 38) d'orientation inclinée.

7. Gyrolaser selon la revendication 2, comportant un bloc de forme triangulaire dans lequel sont réalisés les alésages formant le résonateur, deux électrodes auxquelles est appliquée la tension d'amorçage étant disposées sur deux des côtés du bloc de forme triangulaire, et une électrode au potentiel de référence étant disposée sur la base du bloc de forme triangulaire, caractérisé en ce que les pièges à ions (40, 42) sont disposés entre les électrodes (24, 26) auxquelles est appliquée la tension d'amorçage, et le sommet du bloc (10) de forme triangulaire.

8. Gyrolaser en anneau selon la revendication 7, caractérisé en ce que les électrodes sur les côtés du bloc de forme triangulaire constituent des cathodes (24, 26), et l'électrode sur la base du bloc de forme triangulaire constitue une anode (28).

Fig.1

Fig.1a

A-A₁.)

Fig.1b

A-A₂.)